# EUROPEAN PATENT SPECIFICATION

(11) **EP 0 738 596 B1**
(45) Date of publication and mention of the grant of the patent: **18.08.1999**
(21) Application number: 95116426.8
(22) Date of filing: 18.10.1995
(51) Int. Cl.: B41J 1/00, G06F 3/12

(54) **Control of command buffer for a printing system**
Steuerung des Befehlspuffers für ein Druckersystem
Commande d'un tampon de commande pour un système d'impression

(30) Priority: 19.04.1995 JP 11798195; 20.04.1995 JP 11917195
(43) Date of publication of application: 23.10.1996
(73) Proprietor: FUJI XEROX CO., LTD., Minato-ku Tokyo 107 (JP)
(72) Inventor: Ota, Shinji, c/o Fuji Xerox Co., Ltd., Takatsu-ku, Kawasaki-shi, Kanagawa (JP)
(74) Representative: Grünecker, Kinkeldey, Stockmair & Schwanhäusser Anwaltssozietät

(56) References cited:
- WO-A-94/15300
- US-A- 5 047 957

## Description

### BACKGROUND OF THE INVENTION

The present invention relates to a printing system including a print server and a printing device, and more particularly relates to a printing system for print processing by a print processing command from a print server.

With high speeding in a printing device, a printing system wherein printing requirements by a plurality of clients are received by a printing server and processed, has been widely used. In such a printing system, load reduction in the print server and the high speed print processing have been required to allow processing from many clients.

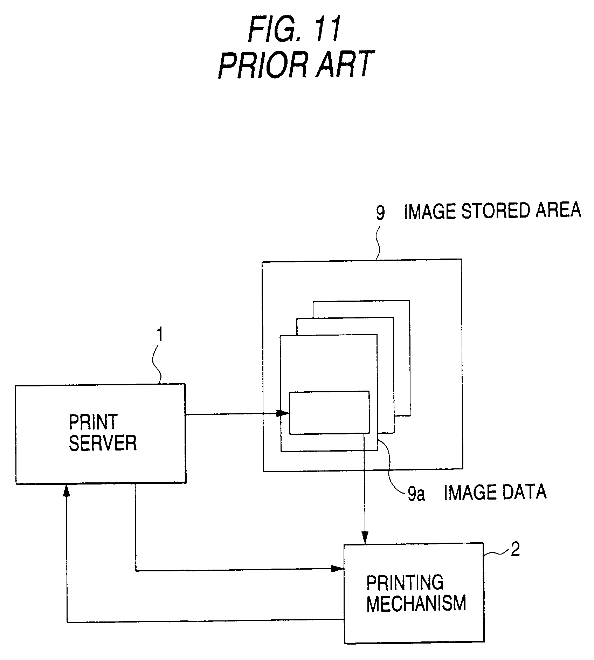

Fig. 11 shows a structure of a conventional printing system. A print server 1 receives printing demand from a client not shown, and instructs a control command for controlling a paper charging/discharging tray and a printing command to a printing mechanism 2. The printing mechanism 2 switches the paper charging/discharging tray in accordance with the control command, charges a paper in accordance with the printing command, and takes image data designated by the printing command from image data 9a in an image stored area 9 to print out them.

On the contrary, a status signal which indicates completion of switching of the paper charging/discharging tray or printing is sent from the printing mechanism 2 to the print server 1. The print sever 1 sends a next control command or printing command to the printing mechanism 2 while monitoring the status signal. In this connection, both the control command and printing command are referred to as the command.

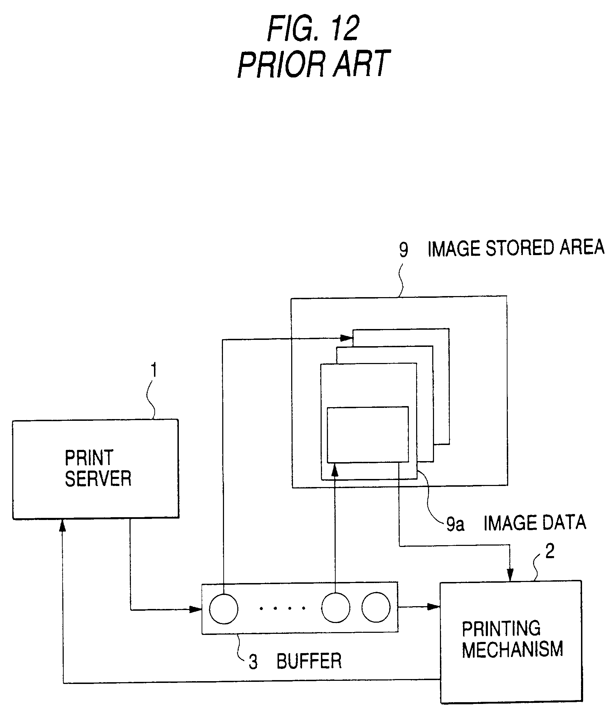

On the other hand, in order to reduce the load of the print server, a printing system providing a buffer between the print server and the printing mechanism has been proposed. For example, as an example providing such buffer, Japanese Patent Unexamined Publication (Kokai) No. Hei. 2-81658 is known. Fig. 12 is a block diagram illustrating a printing system providing a buffer 3 between a print server and a printing mechanism. The print server 1 sends control commands 10a ... 10n, and printing commands 11a ... 11n to the buffer 3. The buffer 3 sends the control commands 10a ... 10n, and printing commands 11a ... 11n in the receiving order to the printing mechanism 2. The printing mechanism switches a paper charging/discharging tray in accordance with the control commands 10a ... 10n and charges a paper in accordance with the printing commands 11a ... 11n. The printing mechanism 2 then takes image data designated by the printing commands from the image data 9a of an image stored area 9 and prints out.

However, in the printing system in which the print sever 1 and the printing mechanism 2 are directly connected to each other as shown in Fig. 11, the print sever 1 must monitor the status signal from the printing mechanism 2 at all times, with the result that the print sever 1 has a great load. Further, even if the status signal from the printing mechanism is changed, a command cannot be sent immediately when there is requirement from another client. Thus, the printing mechanism waits for the command during that time, thereby decreasing the print processing speed.

In turn, in the printing system providing the buffer 3 between the print server 1 and the printing mechanism 2 as shown in Fig. 12, the print server 1 sends commands to the buffer 3 one after another, and after that the print server 1 can processes another job. Accordingly, a load on the print server 1 is reduced. However, since a command is sent from the buffer 3 to the printing mechanism 2 one after another, there occurs a problem that a printing command is sent during switching of the paper charging/discharging tray, or that a control command for switching the paper charging/discharging tray is sent during printing out. In order to remove these problems, it is necessary to output the control command and the printing command while having enough time to spare in the print server, resulting in reduction of the print processing speed.

Further, in the configuration of the printing system as shown in Fig. 12, when an abnormality of paper clogging (jam) or the like occurs in the printing mechanism 2, it is difficult to restore the paper clogging from the print server 1.

### SUMMARY OF THE INVENTION

Accordingly, the present invention has been made in view of the above-mentioned problems. Therefore, an object of the present invention is to provide a printing system in which the load on the printing server is reduced and the print processing can be executed at a high speed.

Further object of the present invention is to provide a printing system in which the load on the print server can be reduced at a normal time of the printing mechanism, and the restoration of the printing mechanism can be smoothly executed at an abnormal time of the printing mechanism.

To solve the above-mentioned problems, according to the present invention, there is provided a printing system wherein a printing is executed by sending a command consisting of a control command for controlling a paper charging/discharging tray and a printing command from a print server to a printing mechanism, characterized by comprising: a print server for outputting the command; a buffer for temporarily storing the command and outputting the command in accordance with the receiving order; a printing mechanism for receiving the command and printing; and a timing control means for holding the control command during printing in said printing mechanism and holding the output of a printing command during switching a paper charging/discharging tray of said printing mechanism, said timing control means being disposed between said buffer and said printing mechanism.

According to the structure of the printing system, a control command to switch a paper charging/discharging tray and a printing command to print out are outputted from a print server. The control command and the printing command are sequentially stored in a buffer. When the printing command is sent to the printing mechanism, the printing mechanism takes image date to be printed out from an image stored area and prints it out. A timing control means holds the output of a control command when the printing mechanism is printing out, and outputs the control command to the printing mechanism after the completion of printing. Further, the timing control means holds the output of the printing command when the printing mechanism is switching the paper charging/discharging tray, and outputs the printing command after the completion of switching to print out.

Further, to solve the above-mentioned problems, according to the present invention, there is provided a printing system wherein a printing is executed by sending a print processing command from a print server to a printing mechanism, characterized by comprising: a print server for outputting the print processing command; a buffer for temporarily storing the print processing command and outputting the print processing command in accordance with the receiving order; a printing mechanism for receiving the print processing command and printing; and a command switching means for clearing said buffer at an abnormal time of said printing mechanism and directly sending a recovery command received from said print server to said printing mechanism, said command switching means being disposed between said print server and said buffer.

According to the structure of the printing system, a print server outputs a print processing command. A command switching means sends the print processing command to a buffer at a normal time of a printing mechanism. The print processing command is sent from the buffer to the printing mechanism in the receiving order. When an abnormality such as paper clogging or the like occurs in the printing mechanism, the abnormality is signaled to the print sever through the command switching means. The command switching means clears the buffer, and directly sends a recovery command from the print sever to the printing mechanism to recover the printing mechanism.

### BRIEF DESCRIPTION OF THE DRAWINGS

Fig. 1 is a block diagram illustrating a schematic printing system according to the first embodiment of the present invention;
Fig. 2 is a block diagram of the whole printing system according to the first embodiment;
Fig. 3 is a diagram illustrating a control command and a printing command according to the first embodiment;
Fig. 4 is a flow chart of processing of a timing control means according to the first embodiment;
Fig. 5 is a time chart illustrating a tray switching operation and a printing operation according to the first embodiment;
Fig. 6 is a block diagram illustrating a schematic printing system according to the second embodiment of the present invention;
Fig. 7 is a block diagram of the whole printing system according to the second embodiment;
Fig. 8 is a diagram illustrating an example of a recovery command according to the second embodiment;
Fig. 9 is a flow chart of processing a status receiving means according to the second embodiment;
Fig. 10 is a flow chart illustrating the details of processing of a command transmitting means according to the second embodiment;
Fig. 11 is a block diagram illustrating a structure of a conventional printing system; and
Fig. 12 is a block diagram of a printing system in which a buffer is provided between a print server and a printing mechanism.

### DETAILED DESCRIPTION OF THE PREFERRED EMBODIMENTS

First, a first embodiment of the present invention will be described.

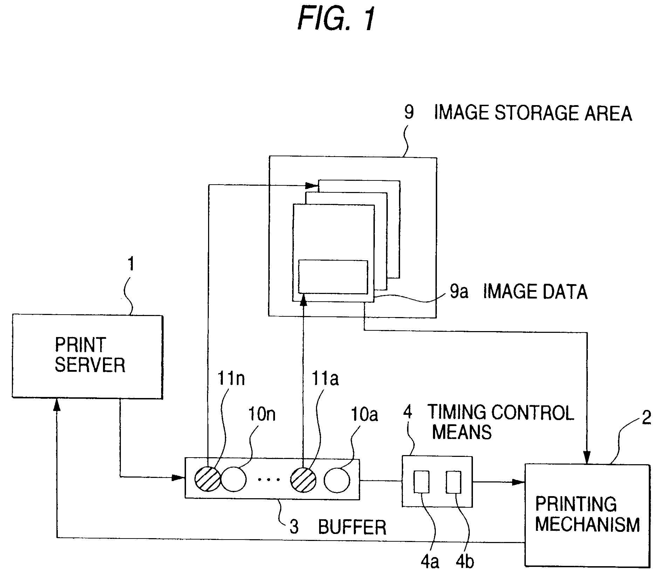

Fig. 1 is a block diagram illustrating a schematic printing system according to the first embodiment of the present invention. The printing system includes a print sever 1 for outputting a command to execute print processing, a buffer 3 for receiving the command from the print sever 1 and outputting the command sequentially, a timing control means 4 for outputting the command at the optimum timing, and a printing mechanism for printing out in accordance with the command. The printing system further includes an image storage area 9 for storing image data 9a to be printed. The timing control means 4 includes a tray switching interdiction timer 4a and a tray switching timer 4b.

The print sever 1 receives print processing from many clients not shown and outputs control commands 10a to 10n for controlling a paper charging/discharging tray and the printing commands 11a to 11n. The control commands 10a to 10n and the printing commands 11a to 11n are sequentially stored in the buffer 3. The timing control means 4 takes the control commands 10a to 10n and the printing commands 11a to 11n in the buffer in the inputted order therefrom. Nevertheless, the timing control means controls the output of the buffer 3 so that the control commands are not outputted during execution of printing commands, on the contrary, so that the printing commands are not outputted during switching the paper charging/discharging tray. This reason is as follows. Namely, when the printing command is inputted to the printing mechanism 2, and a paper charging operation is commenced, switching of the paper charging/discharging tray cannot be executed. On the contrary, printing operation cannot be executed during switching the paper charging/discharging tray. The details of timing of the timing control means will be described later. The printing mechanism 2 prints out in accordance with the control commands 10a to 10n outputted from the timing control means 4 and the printing commands 11a to 11n. That is, the printing mechanism 2 switches the paper charging/discharging tray in accordance with the control commands and reads out image data designated by the printing commands from image data 9a in the image data storage area 9 to print out.

According to such a structure of the printing system, the print server 1 outputs a command to the buffer 3 regardless of an operation condition of the printing mechanism 2. After outputting the command, the printing sever 1 can operate another processing. Thus, the load of the printing sever 1 is reduced. On the other hand, since the timing control means 4 outputs the command of the buffer 3 in accordance with an operation condition of the printing mechanism 2 at the optimum timing, the printing mechanism can print without waste, thereby increasing the print processing speed.

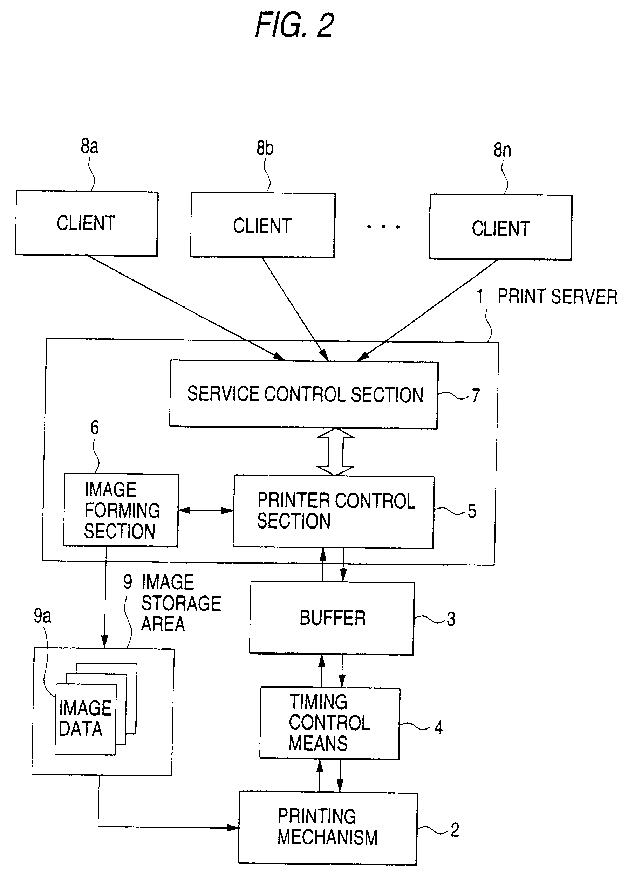

Fig. 2 is a block diagram of a whole printing system. The printing system includes a print sever 1, clients 8a, 8b, ... 8n connected to the print sever 1 by a network, a buffer 3, a timing control means 4, a printing mechanism 2, and an image storage area 9.

Further, the print sever 1 includes a service control section 7 which receives printing demand from the clients 8a to 8n, an image forming section 6 which forms image data, and a printer control section 5 which outputs a command for controlling the printing mechanism 2.

When printing is demanded from the clients 8a, 8b ... 8n to the print sever 1, the service control section 7 receives the printing demand and checks the contents of the demand. If the contents of the printing demand contain some errors, the service control section 7 signals to each client 8a, 8b, ... 8n. If the contents of the printing demand do not contain errors, the service control section 7 executes queuing the printing demand and send it to the printer control section 5. The printer control section 5 signals to form image data in the image forming section 6, in accordance with the printing demand. The formed image data is sent to the image storage area 9. The printing control section 5 sends a control command and a printing command to the buffer 3. The timing control means 4 outputs the control command and the printing command to the printing mechanism 2 in accordance with the operation conditions of the printing mechanism 2, as stated above. The printing mechanism 2 switches a paper charging/discharging tray in accordance with the control command and charges a paper in accordance with the printing command. Then the printing mechanism 2 takes image data designated by a printing command from the image data 9a and prints out.

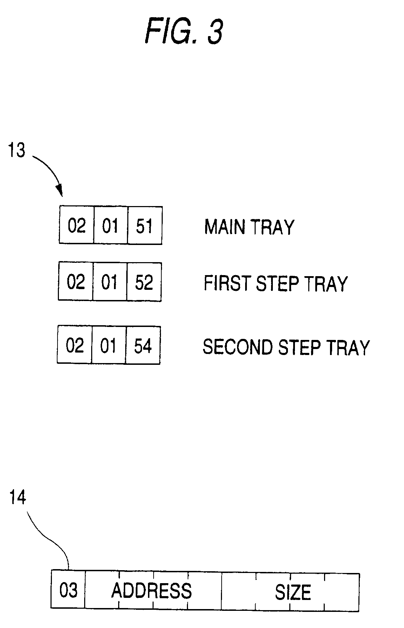

The details of the control command and the printing command will now be described. Fig. 3 is a diagram illustrating a control command and a printing command. The control command 13 includes three portions. "02" on the left side of the portions is a control code for switching a paper charging/discharging tray. "01" in the center of the portions is a subsequent number of a designated value. "51", "52", and "54" on the right hand of the portions designate a paper charging tray respectively, and "51" means a main tray, "52" means a first step tray, and "54" means a second step tray.

The printing command 14 includes three portions. "03" on the left side of the portions is a control code of a printing command. "Address" in the center thereof designates the front address of the image data to be printed out in the image storage area, and "Size" on the right side thereof designates a size of the image data to be printed out.

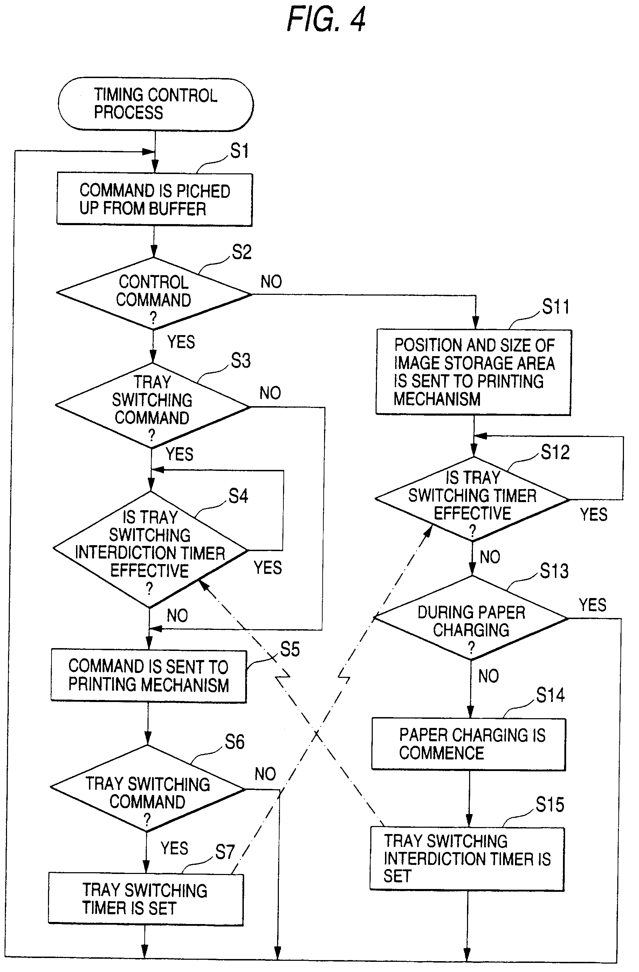

Next, the details of the timing control means 4 will be described. Fig. 4 is a flow chart of processing of the timing control means 4. The number subsequent to "S" indicates a step number.
"S1" A command is picked up from the buffer 3. "S2" It is determined whether the command is a control command or a printing command. If it is a control command, processing proceeds to step S3, or if it is a printing command, processing proceeds to step S11.
"S3" It is determined whether the control command is a tray switching command or another control command. If it is a tray switching command, processing proceeds to step S4, or if it is not so, processing proceeds to step S5.
"S4" It is determined whether a tray switching interdiction timer is effective or not. The tray switching interdiction timer is a timer which interdicts switching of the tray for a time since paper charging is commenced by a printing command, until a printing paper is out from the tray. Namely, the time since paper charging is commenced by a printing command, until a printing paper is out from the tray, is previously set, the tray switching interdiction timer is on at the commencement of paper charging and the timer is off after the printing paper has been set. While the tray switching interdiction timer is effective, processing does not proceed to the next step, but waits at the step S4. If the tray switching interdiction timer is changed off, processing proceeds to step S5.
"S5" The command is sent to the printing mechanism 2.
"S6" It is determined again whether the command is a tray switching command or not. If the command is not a tray switching command, processing returns back to the step S1, and if the command is a tray switching command, processing proceeds to step S7.
"S7" If the command is a tray switching commond, a tray switching timer is started. The tray switching timer is a timer which interdicts that a printing command is sent to the printing mechanism during tray switching and a paper charging operation is commenced.
"S11" Since the command is determined to be a printing command at the step S2, the position (front address) and amount (size) of the image data designated by a printing command are sent to the printing mechanism 2.
"S12" It is determined whether the tray switching timer set at the step S7 is effective or not. If the tray switching timer is effective, the printing mechanism 2 is in tray switching, and the timing control means 4 waits. If the tray switching timer is changed off, processing proceeds to step S13.
"S13" It is determined whether the printing mechanism is in paper charging or not. If it is in paper charging, processing returns back to the step S1, and if it is not in paper charging, processing proceeds to step S14.
"S14" A paper charging is commenced. The position and the amount of the image data have already been sent to the printing mechanism 2. Therefore, when the paper charging is completed, printing out is immediately executed.
"S15" A paper charging is commenced, and at the same time, a tray switching interdiction timer is started. Thus, it is interdicted that until the paper charging is completed the tray switching command is sent to the printing mechanism.

It has been described with reference to Fig. 1 that the printing command is not outputted to the printing mechanism 2 during tray switching. However, in the above description using Fig. 4, the position and amount of the image data in the printing command is sent to the printing mechanism 2 (S11), and only the commencement of paper charging is not sent to the printing mechanism 2. Thus, the printing mechanism 2 can pick up the image data previously, with the result that the print processing speed can be further increased. Of course, as described with reference to Fig. 1, the processing can be also changed so that the printing command itself is not outputted to the printing mechanism 2.

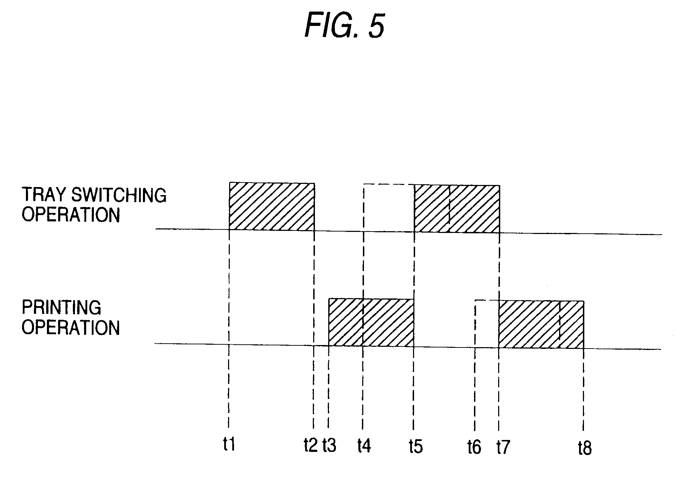

Next, a time relationship between the tray switching operation and the printing operation will be described. Fig. 5 is a time chart illustrating a tray switching operation and a printing operation. A tray switching operation is commenced at time t1. The tray switching operation is completed at time t2. A tray switching timer is changed to be effective (on) between time t1 and t2. A printing operation is commenced at time t3, and the printing operation is completed at time t5. The tray switching interdiction timer is changed to be effective (on) between time t3 and t5.

Although a tray switching command is going to be outputted from the buffer 3 at time t4, the tray switching interdiction timer is effective (on) so that the tray switching command is not outputted from the buffer 3 to the printing mechanism 2 till time t5. At time t5, the tray switching interdiction timer is changed to be off, the tray switching command is sent from the timing control means 4 to the printing mechanism 2, and the tray switching operation is executed. Although the printing command is going to be outputted from the buffer 3 at time t6 during the tray switching operation, the tray switching timer is effective (on) so that the printing command is outputted to the printing command at time t7 when the tray switching timer is changed to be off, whereby the printing operation is commenced and completed at time t8.

Thus, in the tray switching operation, the printing operation is waited for, and on the contrary, in the printing operation, the tray switching is waited for. Therefore, the printing mechanism 2 may faithfully execute commands provided.

On the other hand, the print server 1 can send a control command and a printing command to the buffer 3 regardless of the operation of the printing mechanism 2, whereby the load of the print server 1 is reduced. Transfer of the control command and the printing command to the printing mechanism 2 can be carried out without a useless stand-by time, with the result that a further high speed print processing can be executed.

In the above-mentioned printing system, one set of the buffer 3, timing control output means 4, and printing mechanism 2 has been described. However, the present invention can be applied to the printing system providing a plurality of sets of those parts.

Further, the printing mechanism may be a printer such as a laser printer, a dot printer, a LED printer or the like.

Furthermore, the printing server may be a work station, a personal computer, a programmable controller, or the like.

As explained above, according to this embodiment, a timing control means is disposed between a buffer which receives a command from a print server and a printing mechanism, and the timing control means sends a control command and a printing command to a printing mechanism in accordance with the operation of the printing mechanism. Accordingly, the load of the printing server is reduced, thereby increasing the print processing speed.

A second embodiment of the present invention will now be described.

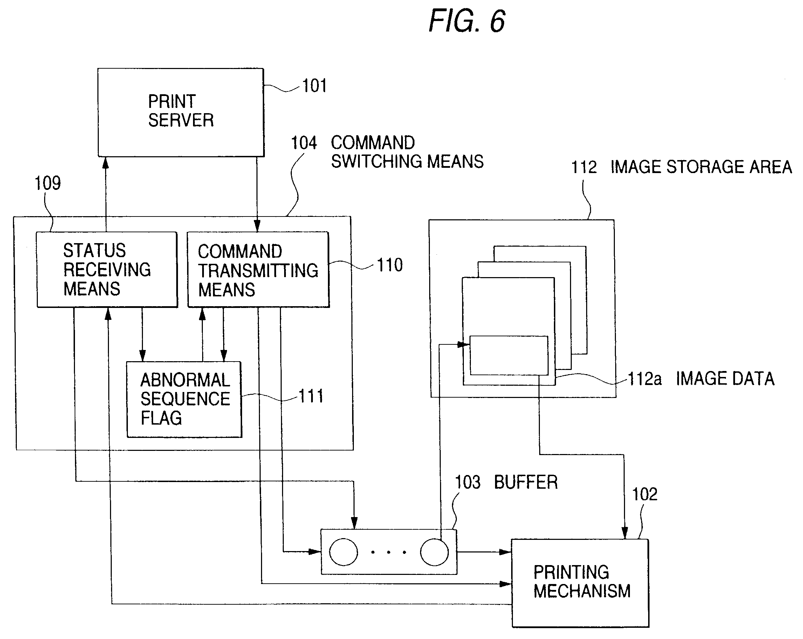

Fig. 6 is a block diagram illustrating a schematic printing system of a second embodiment of the present invention. The printing system includes a print server 101 which outputs a print processing command and a recovery command, a command switching means 104 which receives the print processing command and the recovery command from the print server 101 and outputs the commands to sections different between at a normal time and at an abnormal time, a buffer 103 which receives the print processing command from the command switching means 104 and outputs the command sequentially, and a printing mechanism 102 which prints out in accordance with the print processing command from the buffer 103. The printing system further includes an image storage area 112 which stores image data 112a to be printed out.

Further, the command switching means 104 includes a status receiving means for monitoring the status of the printing mechanism 102, a command transmitting means 110 which sends a print processing command outputted from the print server 101 to the buffer 103 at a normal time, and directly sends a recovery command to the printing mechanism 102 at an abnormal time, and an abnormal sequence flag 111 which is set at an abnormal time.

As the print server 101, a work station, a personal computer, a programmable controller or the like may be used. Further, as the printing mechanism 102, several kinds of printer, such as a laser printer, a dot printer, a LED printer or the like may be used.

The print server 101 outputs a print processing command. The print processing command usually includes a control command for switching a paper charging/discharging tray and a printing command for printing out. The command transmitting means 110 sends a print processing command to the buffer 103 at a normal time, and the print processing command is sent from the buffer 103 to the printing mechanism 102 sequentially. On the other hand, when an abnormality occurs in the printing mechanism 102, the status receiving means 109 signals the abnormality to the print server 101, the buffer 103 is cleared, and the abnormal sequence flag 111 is set. When the abnormality is signaled to the print server 101, the print server 101 outputs a recovery command to recover the printing mechanism 102. When the abnormal sequence flag 111 is set, the command transmitting means 110 directly sends the recovery command outputted from the print server 110 to the printing mechanism 102, so that recovery from the abnormality such as paper clogging or the like is made.

In this connection, the recovery command contains a plurality of commands. After the command transmitting means 110 sends a final command of the recovery command to the printing mechanism 102, the command transmitting means 110 resets the abnormal sequence flag 111. After that, the command transmitting means 110 sends a print processing command outputted from the print server 101 to the buffer 103, and the printing mechanism 102 executes a printing operation by the print processing command outputted from the buffer 103.

Therefore, in the print server 101, the load for monitoring the printing mechanism 102 is reduced at the normal time, and the recovery at the abnormal time can be made smoothly.

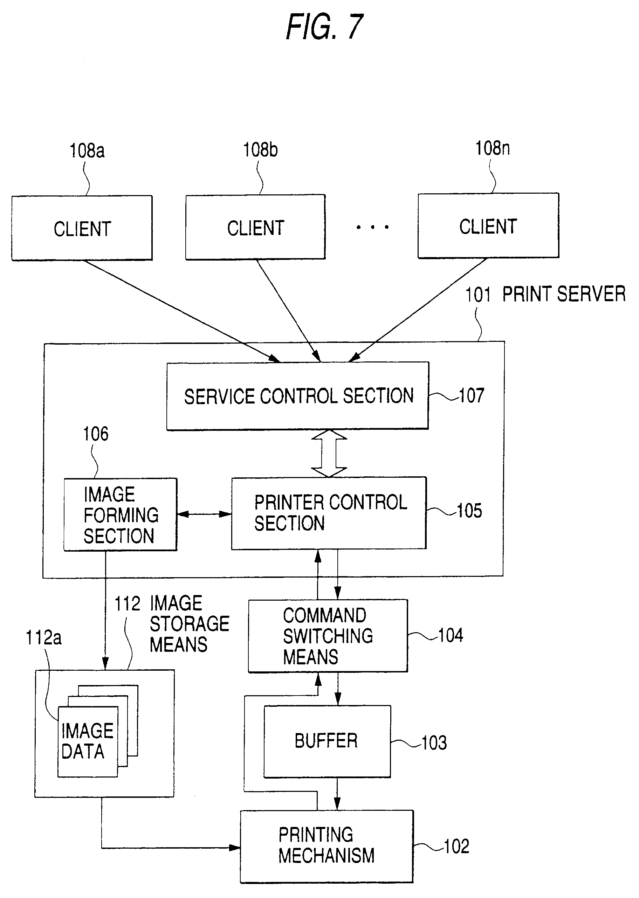

Fig. 7 is a block diagram illustrating a whole printing system according to the second embodiment. The printing system includes a print server 101, clients 108a, 108b ... 108n connected to the print server 101 by a network, a command switching means 104, a buffer 103, a printing mechanism 102, and an image storage area 112 which stores image data 112a.

Further, the print server 101 includes a service control section 107 which receives a printing demand from the clients 108a to 108n, an image forming section 106 which forms image data, and a printer control section 105 which outputs a print processing command and a recovery command.

When a printing demand is signaled from the clients 108a, 108b, ... 108n to the print server 101, the service control section 107 receives this printing demand and checks the contents of the printing demand. If the contents of the printing demand contains an error, the service control section 107 signals to the clients 108a, 108b, ... 108n, and if the contents of the printing demand does not contain an error, the service control section 107 queues the printing demand to send it to the printer control section 105. The printer control section 105 signals to form image data at the image forming section 106 in accordance with the printing demand and sends the image data to the image storage area 112. Further, the printer control section 105 sends a print processing command to the command switching means 104. As described above, the command switching means 104 sends the print processing command to the buffer 103 when the printing mechanism 102 is normal. The printing mechanism 102 switches a paper charging/discharging tray in accordance with a control command of the print processing command outputted from the buffer 103, charges a paper in accordance with a printing command, picks up image data designated by the printing command from the image data 112a and prints out.

On the other hand, an abnormality such as a paper clogging or the like occurs in the printing mechanism 102, the command switching means 104 clears the buffers 103 and signals the abnormality to the printer control section 105. The printer control section outputs a recovery command, and the command switching means 104 directly sends the recovery command to the printing mechanism 102 so that the printing mechanism 102 can be recovered.

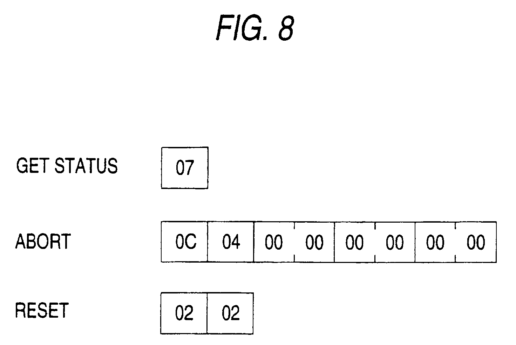

The details of the recovery command will now be described. Fig. 8 is a diagram illustrating an example of a recovery command. "Get Status" shown in Fig. 8 is a command which demands transmission of a status signal indicating the present state, to the printing mechanism 102 to recognize the contents of the abnormality. "07" shown in Fig. 8 indicates an operation code to read the status signal.

"Abort" shown in Fig. 8 is a command to clear the print processing command which has already been sent to the printing mechanism 102. The first four bytes "0 C 0 4" are the operation code, and the remaining six bytes are codes which designate a seat number to be cleared, side numbers or the like. The details thereof are omitted.

"Reset" is a command for resetting the printing mechanism 102 to the initial state. Four bytes "0 2 0 2" of the command is an operation code.

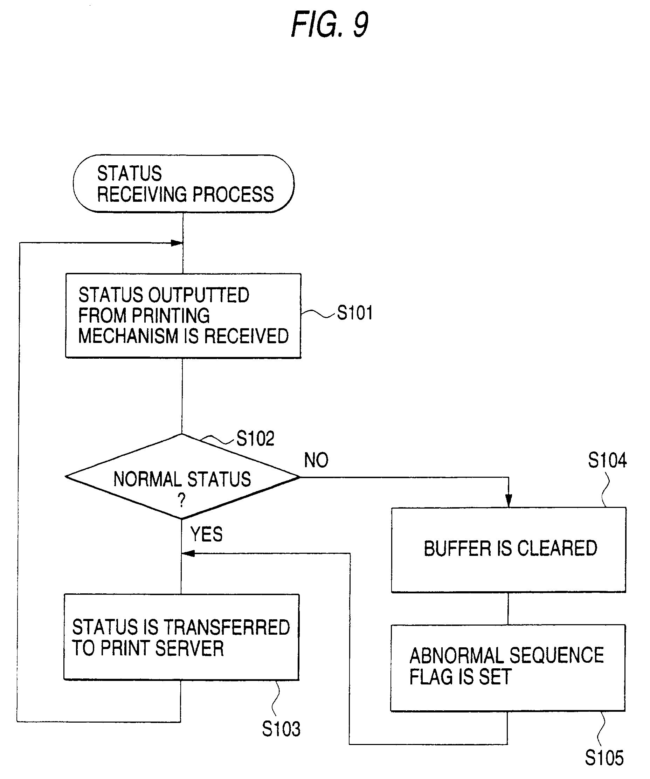

The details of processing of the status receiving means 109 will now be described. Fig. 9 is a flow chart of processing of the status receiving means 109. The number after "S" is a step number.
"S101" A status signal outputted from the printing mechanism 102 is received.
"S102" It is determined whether the status signal is normal or not. If it is normal, processing proceeds to step S103, and if it is abnormal, processing proceeds to step S104.
"S103" The status signal is normal, and the status signal is transferred to the print server 101.
"S104" The status signal is abnormal, and the status receiving means 109 clears the buffer 103.
"S105" The abnormal sequence flag 111 is then set.

Thus, the status receiving means 109 signals the abnormality of the printing mechanism 102 to the print server 101, clears the buffer 103 and sets the abnormal sequence flag 111.

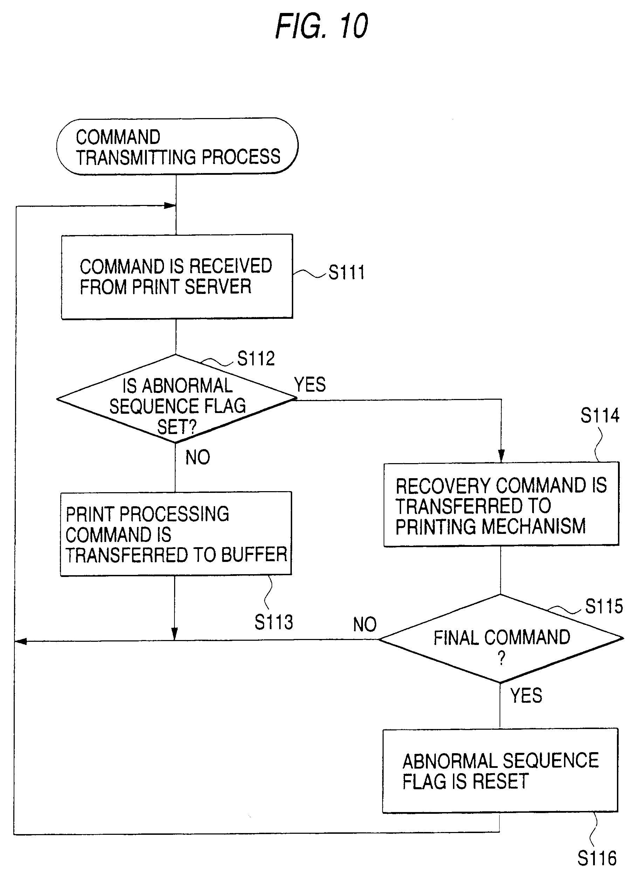

Next, the details of processing the command transmitting means 110 will be described. Fig. 10 is a flow chart illustrating the details of processing of the command transmitting means 110.
"S111" A command is received from the print server 101.
"S112" It is confirmed whether the abnormal sequence flag 111 is set or not. If the abnormal sequence flag 111 is not set, processing proceeds to step S113, and if the abnormal sequence flag 111 is set, processing proceeds to step S114.
"S113" The abnormal sequence flag has not been set. Accordingly, a print processing command is transferred to the buffer 103.
"S114" Since the abnormal sequence flag 111 is set, a recovery command outputted from the print server 101 is directly transferred to the printing mechanism 102.
"S115" It is determined whether the recovery command is the final command (Reset command in Fig. 8) or not. If the recovery command is not the final command, processing returns back to the step S111, and if it is the final command, processing proceeds to step S116.
"S116" Since the recovery command is the final command, it is assumed that the printing mechanism 102 has been recovered. Thus, the abnormal sequence flag 111 is reset. After that, a normal operation is returned back.

As explained above, when the printing mechanism 102 is normal, the command transmitting means 110 sends a print processing command to the buffer 103, and when the printing mechanism 102 is abnormal, the command transmitting means 110 directly sends the recovery command to the printing mechanism 102, so that the printing mechanism 102 is recovered.

In the above-mentioned descriptions, the final command of the recovery command has been transferred to the printing mechanism 102. Thus, the abnormal sequence flag 111 has been reset. However, the abnormal sequence flag may be reset by the fact that the status signal is changed to be normal through monitoring of the status of the printing mechanism 102.

As explained above, according to the second embodiment of the present invention, when the printing mechanism is normal, the print processing command outputted from the print server is sent to the printing mechanism through the buffer, and when the printing mechanism is abnormal, the recovery command outputted from the print server is directly sent to the printing mechanism. Therefore, when the printing mechanism is normal, the load of the print server is reduced, and when the printing mechanism is abnormal, the recovery can smoothly be made.

## Claims

1. A printing system, comprising:
a print server for outputting a command consisting of a control command for controlling a paper charging/discharging tray and a printing command;
a buffer for temporarily storing said command and outputting said command in accordance with receiving order;
a printing mechanism for receiving said command and printing; and
a timing control means for holding said control command during printing of said printing mechanism and holding said printing command during switching the paper charging/discharging tray of said printing mechanism, said timing control means being disposed between said buffer and said printing mechanism.

2. A printing system according to claim 1, wherein said timing control means includes a first timer for determining a time in which said control command is held and a second timer for setting a time in which said printing command is held.

3. A printing system, comprising:
a print server for outputting a print processing command;
a buffer for temporarily storing said print processing command and outputting said print processing command in accordance with receiving order;
a printing mechanism for receiving said print processing command and printing; and
a command switching means for clearing said buffer at an abnormal time of said printing mechanism and directly sending a recovery command received from said print server to said printing mechanism, said command switching means being disposed between said print server and said buffer.

4. A printing system according to claim 3, wherein said command switching means comprises an abnormal sequence flag; a status receiving means for recognizing abnormality of said printing mechanism by a status signal from said printing mechanism, notifying said print server of said abnormality, outputting a clear signal to clear said butter, and setting said abnormal sequence flag; and a command transmitting means for sending said print processing command to said buffer when said abnormal sequence flag is not set and sending said recovery command to said printing mechanism when said abnormal sequence flag is set.

## Patentansprüche

1. Drucksystem mit:
einem Druckserver zum Ausgeben eines Befehls, der aus einem Steuerbefehl zum Steuern eines Papier-Lade-/Ausgabefachs und aus einem Druckbefehl besteht,
einem Puffer zum temporären Speichern des Befehls und zum Ausgeben des Befehls in Übereinstimmung mit der Empfangsreihenfolge,
einem Druckmechanismus zum Empfangen des Befehls sowie zum Drucken, und
einer Zeitsteuereinrichtung zum Speichern des Steuerbefehls während des Druckens des Druckmechanismus und zum Speichern des Druckbefehls während des Schaltens des Papier-Lade-/Ausgabefachs des Druckmechanismus, wobei die Zeitsteuereinrichtung zwischen dem Puffer und dem Druckmechanismus angeordnet ist.

2. Drucksystem nach Anspruch 1, wobei die Zeitsteuereinrichtung eine erste Zeitsteuerung zum Bestimmen einer Zeit, während welcher der Steuerbefehl gespeichert wird, sowie eine zweite Zeitsteuerung zum Setzen einer Zeit, während weicher der Druckbefehl gespeichert wird, umfaßt.

3. Drucksystem mit:
einem Druckserver zum Ausgeben eines Druckverarbeitungsbefehls,
einem Puffer zum temporären Speichern des Druckverarbeitungsbefehls und zum Ausgeben des Druckverarbeitungsbefehls in Übereinstimmung mit der Empfangsreihenfolge,
einem Druckmechanismus zum Empfangen des Druckverarbeitungsbefehls sowie zum Drucken, und
einer Befehlsschalteinrichtung zum Löschen des Puffers zu einem abnormalen Zeitpunkt des Druckmechanismus und zum direkten Senden eines vom Druckserver empfangenen Behebungsbefehls an den Druckmechanismus, wobei die Befehlsschalteinrichtung zwischen dem Druckserver und dem Puffer angeordnet ist.

4. Drucksystem nach Anspruch 3, wobei die Befehlsschalteinrichtung ein Abnormale-Sequenz-Flag, eine Statusempfangseinrichtung zum Erkennen der Abnormalität des Druckmechanismus durch ein Statussignal vom Druckmechanismus, zum Benachrichtigen des Druckservers über die Abnormalität, zum Ausgeben eines Löschsignals zum Löschen des Puffers und zum Setzen des Abnormale-Sequenz-Flags, sowie eine Befehlsübertragungseinrichtung zum Senden des Druckverarbeitungsbefehls zum Puffer, wenn das Abnormale-Sequenz-Flag nicht gesetzt ist, und zum Senden des Behebungsbefehls zum Druckmechanismus, wenn das Abnormale-Sequenz-Flag gesetzt ist, umfaßt

## Revendications

1. Système d'impression comprenant :
un serveur d'impression pour émettre en sortie une commande qui est constituée par une commande de contrôle pour contrôler un plateau de charge/décharge de papier et par une commande d'impression ;
un tampon pour stocker temporairement ladite commande et pour émettre en sortie ladite commande conformément à un ordre de réception ;
un mécanisme d'impression pour recevoir ladite commande et pour réaliser une impression ; et
un moyen de commande cadencement pour bloquer ladite commande de contrôle pendant l'impression dudit mécanisme d'impression et pour bloquer ladite commande d'impression pendant la commutation du plateau de charge/décharge de papier dudit mécanisme d'impression, ledit moyen de commande de cadencement étant disposé entre ledit tampon et ledit mécanisme d'impression.

2. Système d'impression selon la revendication 1, dans lequel ledit moyen de commande de cadencement inclut une première minuterie pour déterminer un temps pendant lequel ladite commande de contrôle est bloquée et une seconde minuterie pour établir un temps pendant lequel ladite commande d'impression est bloquée.

3. Système d'impression comprenant :
un serveur d'impression pour émettre en sortie une commande de traitement d'impression ;
un tampon pour stocker temporairement ladite commande de traitement d'impression et pour émettre en sortie ladite commande de traitement d'impression conformément à un ordre de réception ;
un mécanisme d'impression pour recevoir ladite commande de traitement d'impression et pour réaliser une impression ; et
un moyen de commutation de commande pour mettre à zéro ledit tampon à un instant anormal dudit mécanisme d'impression et pour envoyer directement une commande de restauration reçue depuis ledit serveur d'impression audit mécanisme d'impression, ledit moyen de commutation de commande étant disposé entre ledit serveur d'impression et ledit tampon.

4. Système d'impression selon la revendication 3, dans lequel ledit moyen de commutation de commande comprend un indicateur de séquence anormale ; un moyen de réception d'état pour reconnaître une anomalie dudit mécanisme d'impression au moyen d'un signal d'état en provenance dudit mécanisme d'impression, pour notifier audit serveur d'impression ladite anomalie, pour émettre en sortie un signal de mise à zéro afin de mettre à zéro ledit tampon et pour établir ledit indicateur de séquence anormale ; et un moyen de transmission de commande pour envoyer ladite commande de traitement d'impression audit tampon lorsque ledit indicateur de séquence anormale n'est pas établi et pour envoyer ladite commande de restauration audit mécanisme d'impression lorsque ledit indicateur de séquence anormale est établi.
